# EUROPEAN PATENT SPECIFICATION

(11) **EP 1 080 851 B1**
(45) Date of publication and mention of the grant of the patent: **29.06.2005**
(21) Application number: 00307559.5
(22) Date of filing: 01.09.2000
(51) Int. Cl.: B25J 15/02

(54) **Parallel gripper with a synchronising mechanism**
Parallelgreifer mit einem Synchroniermechanismus
Pince de saisie de type parallèle munie d'un mécanisme de synchronisation

(30) Priority: 03.09.1999 US 389257; 17.09.1999 US 398839
(43) Date of publication of application: 07.03.2001
(73) Proprietor: PHD, Inc., Fort Wayne, IN 46809 (US)
(72) Inventor: Null, Lyle A., Markle, Indiana 46770 (US); Kistler, Gordon, Fort Wayne, Indiana 46804 (US); Shepherd, Scott A., Hoagland, Indiana 46745 (US)
(74) Representative: Howe, Steven

(56) References cited:
- EP-A- 0 532 174
- WO-A-98/15393
- US-A- 4 696 503
- US-A- 4 765 669
- US-A- 5 529 359
- US-A- 6 039 375
- PATENT ABSTRACTS OF JAPAN vol. 002, no. 057 (M-017), 25 April 1978 (1978-04-25) & JP 53 018165 A (TOSHIBA CORP), 20 February 1978 (1978-02-20)

## Description

### Technical Field

The present invention relates to fluid actuated gripper and clamp mechanisms for engaging, transporting, handling and releasing various workpieces and articles by a pair of opposed movable jaw members. More particularly, the present invention is directed to synchronizing mechanisms for fluid actuated clamps and grippers, including wear or self-compensating synchronizing mechanisms.

### Background Art

Clamp and gripper devices are well known and widely used in a variety of applications, including workpiece machining, component assembly, component and workpiece testing, packaging, shipping, etc. Clamp and gripper devices are typically provided at the ends of robotic arms, or on linear or non-linear transfer devices which are positioned between two or more work stations.

Clamp and gripper devices can roughly be classified as parallel or angular. Angular devices include those whose jaw members move in a pivotal manner. Parallel clamp and gripper devices include one or more jaw member which move linearly between open and closed positions. Examples of parallel clamp and gripper devices are found in U.S. Patent Nos. 5,755,475 to Zajac, Jr., 5,620,223 to Mills, 5,657,973 to Zajac, Jr. et al., 5,595,413 to McGeachy et al., 5,529,359 to Borcca et al., 5,163,729 to Borcea et al., 5,090,757 to Huber et al, 4,892,344 to Takada et al., 4,768,821 to Hucul et al., 4,723,806 to Yuda, 4,647,100 to Lessway and 4,591,199 to Zajac.

Parallel clamp and gripper devices which involve the use of opposed fluid actuated pistons to drive opposed jaw members can independently drive the jaw members at different speeds and/or under different forces if the pneumatic or hydraulic systems are not properly balanced. In some circumstances wherein it is desired to have the opposed jaws close at the same speed and/or under the same degree of force, synchronising mechanisms can be included in parallel clamp and gripper device. Of the above listed U.S. Patents, most include some type of synchronising mechanism.

EP-A-0532174 discloses a further example of a parallel gripper assembly. According to the disclosure in this prior art, two mounting blocks are each slidably supported on a main housing by a pair of guide rods, each of the guide rods being supported within respective through-holes in the main housing. One of the guide rods supporting each of the mounting blocks includes a rack portion. The main housing includes a gear chamber including a pinion gear. The teeth of the pinion gear engage the teeth of the rack portions of both guide rods, thereby synchronising the movement of the mounting blocks. The gear chamber is closed by a cover plate.

According to the present invention, a gripper assembly comprising:
a body;
at least one piston provided within a chamber within the body for opposed reciprocal movement therein;
a pair of opposed jaw members the jaw members being located at opposite ends of the body, at least one of the jaw members being coupled to one of the at least one piston for reciprocal movement between open and closed positions;
first and second elongate jaw guide members, wherein the first elongate jaw guide member is attached to one of the opposed jaw members and is positioned substantially parallel to the second elongate jaw guide member which is attached to the other of the opposed jaw members; and
a synchronising assembly located in a recess formed in the body, the recess extending from the body's exterior allowing access to the synchronising assembly wherein the synchronising assembly is rotatable about an axis, and wherein first and second through-holes are formed in the body and extend into the recess,
is characterised in that the synchronising assembly is engageable with the first and second elongate jaw guide members by a pin extending through the first through-hole from the first elongate jaw guide member and another pin extending through the second through-hole from the second elongate jaw guide member.

### Brief Description of Drawings

The present invention will be described hereafter with reference to the attached drawings which are given as non-limiting examples only, in which:
Figure 1 is an exploded perspective view of a parallel gripper assembly according to one embodiment of the present invention.
Figure 2 is a cross-sectional side view of the parallel gripper assembly of Fig. 1.
Figure 3 is a perspective view of a synchronising mechanism according to an alternative embodiment of the present which depicts the mechanism in a closed position.
Figure 4 is a perspective view of the synchronizing mechanism of Fig. 3 in an open or expanded position.
Figures 5a-5d are top planar views which depict the manner in which the synchronizing mechanism of Figs. 3 and 4 operate.
Figure 6 is a perspective view of a synchronizing element according to another embodiment of the present invention.
Figure 7 is a side view of the synchronizing element of Fig. 6.
Figure 8 is a top view of the synchronizing element of Fig. 6.
Figures 9a-12b are perspective views of alternative synchronizing elements according to the present invention.
The figures 13 to 30 are not part of the invention. They only present further possible developments of a parallel gripper provided with a synchronizing mechanism.

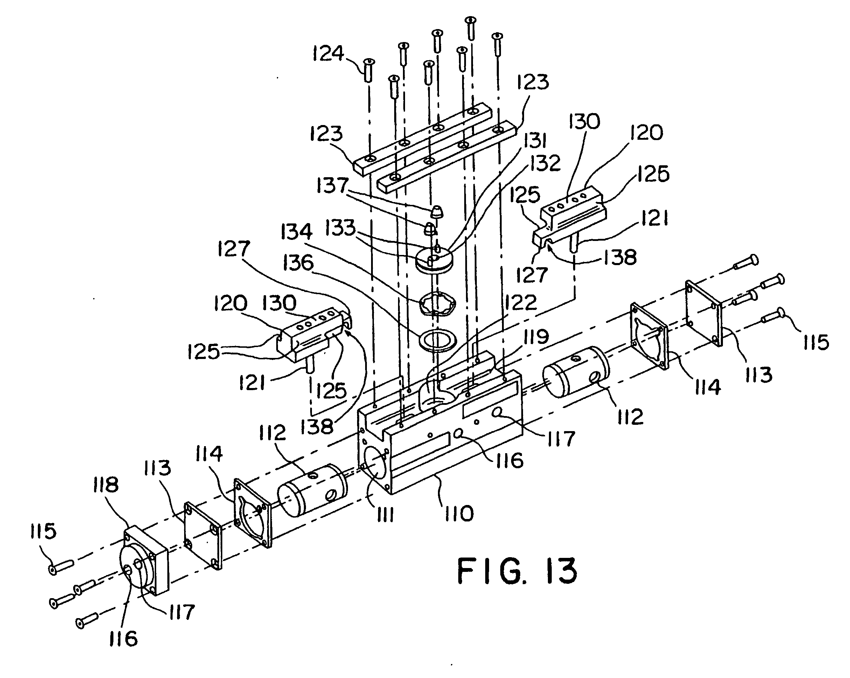

Figure 13 is an exploded perspective view of a parallel gripper assembly according to further possible developments of a parallel gripper provided with a synchronizing mechanism.

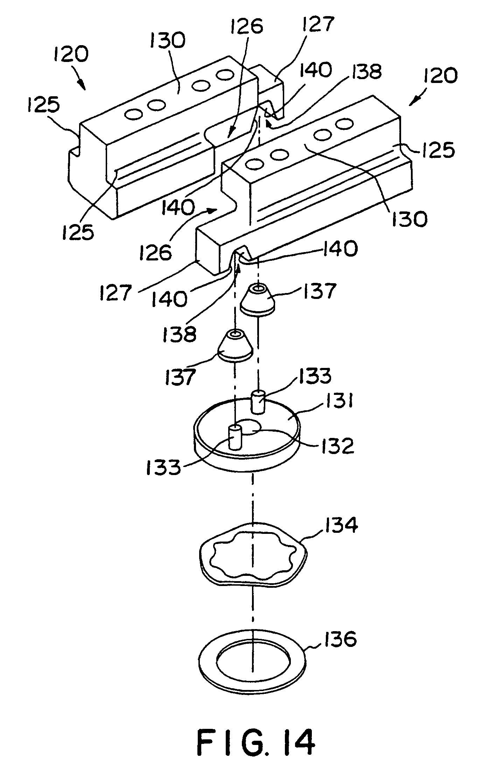

Figure 14 is an enlarged view of the synchronizing mechanism of Fig. 13 which is provided to show more details of the synchronizing mechanism.

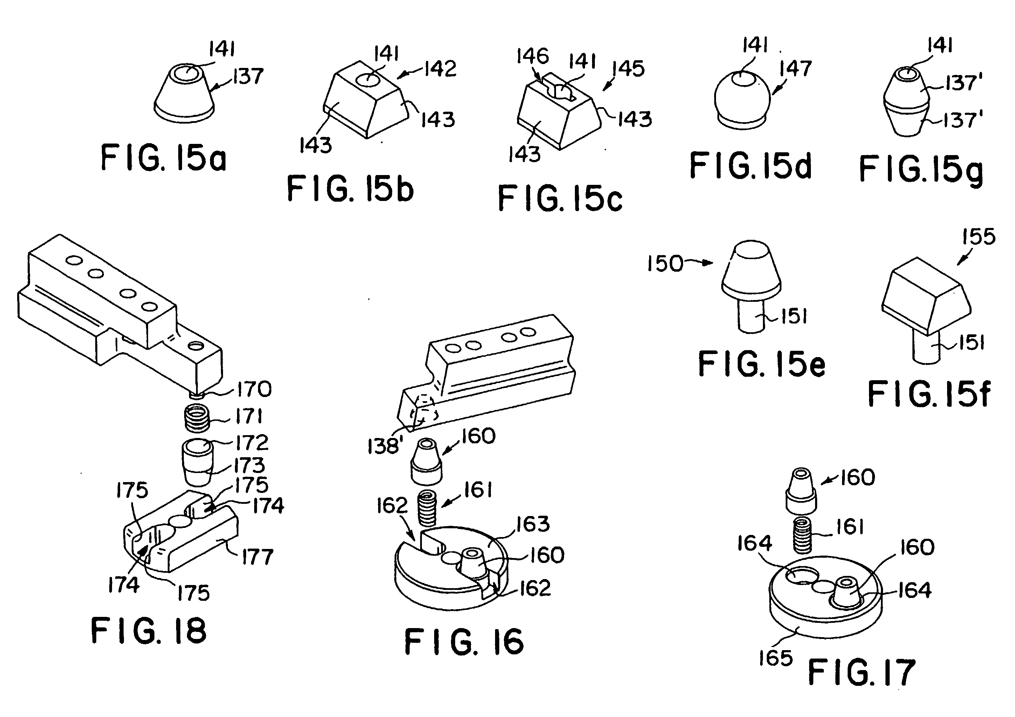

Figures 15a-15g are perspective views of alternative wedge elements according to further possible developments of a parallel gripper provided with a synchronizing mechanism.
Figures 16 and 17 are perspective views of synchronizing mechanisms according to further possible developments of a parallel gripper provided with a synchronizing mechanism.
Figure 18 is a perspective view of synchronizing mechanisms according to further possible developments of a parallel gripper provided with a synchronizing mechanism.

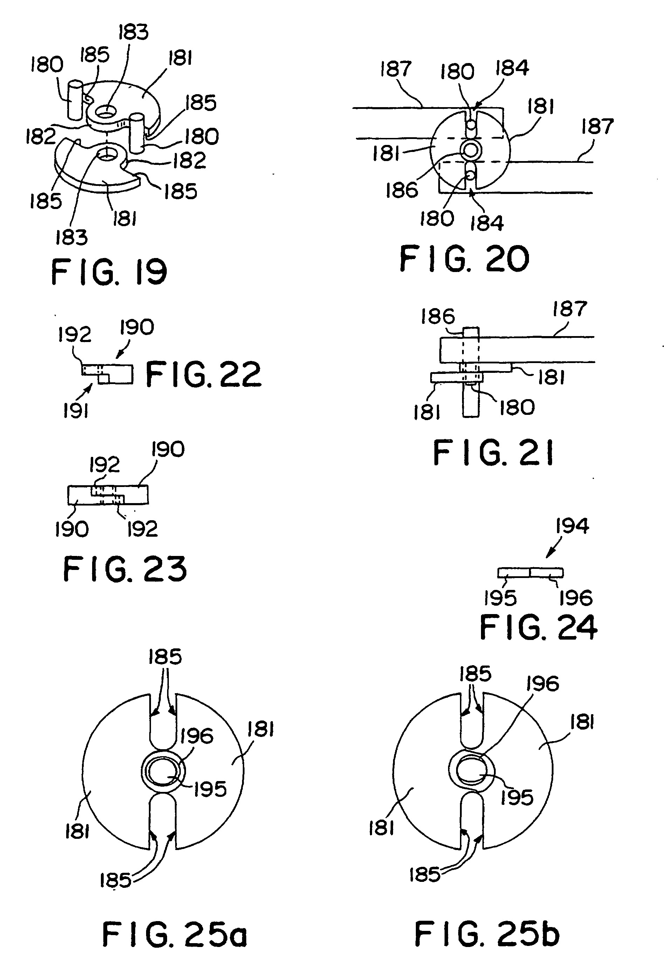

Figure 19 is an exploded perspective view of a synchronizing mechanism according to further possible developments of a parallel gripper provided with a synchronizing mechanism.
Figure 20 is a top planar view of the synchronizing mechanism of Fig. 19 which depicts the jaw members in phantom lines.
Figure 21 is a side view of the synchronizing mechanism of Fig. 20 taken parallel to one of the jaw members.
Figure 22 is a side view of an alternative embodiment of a half disc element which can be used according to further possible developments of a parallel gripper provided with a synchronizing mechanism.
Figure 23 is a side view of two of the half disc elements of Fig. 22 coupled together with their through-holes aligned.
Figure 24 is a side view of an eccentric pivot post or pin which can be used according to further possible developments of a parallel gripper provided with a synchronizing mechanism.
Figures 25a and 25b are top planar views which depict how the eccentric pivot post or pin of Fig. 24 can be used to adjust the clearance between two half disc elements.

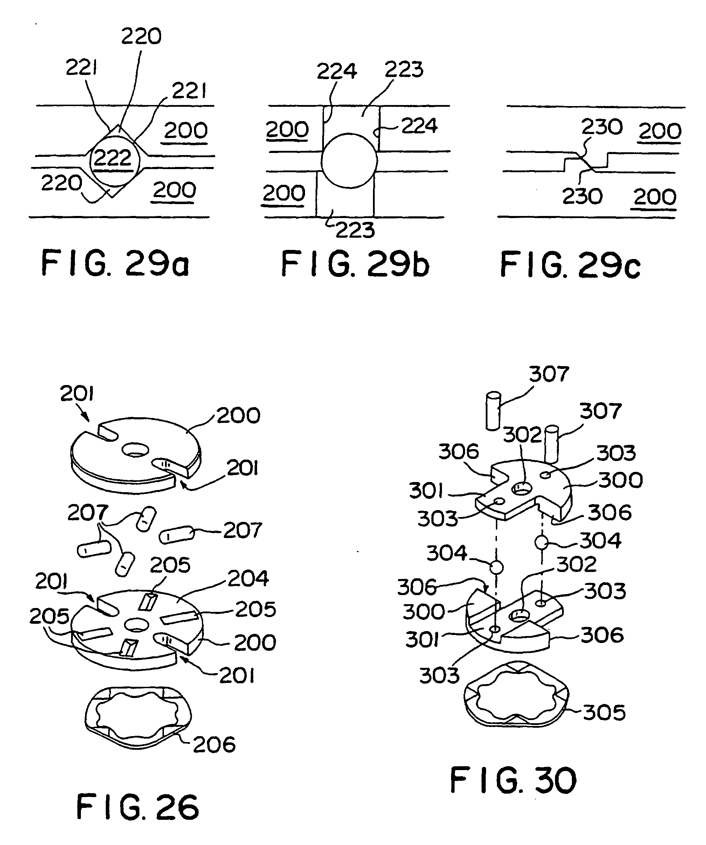

Figure 26 is a perspective exploded view of a synchronizing mechanism according to further possible developments of a parallel gripper provided with a synchronizing mechanism.

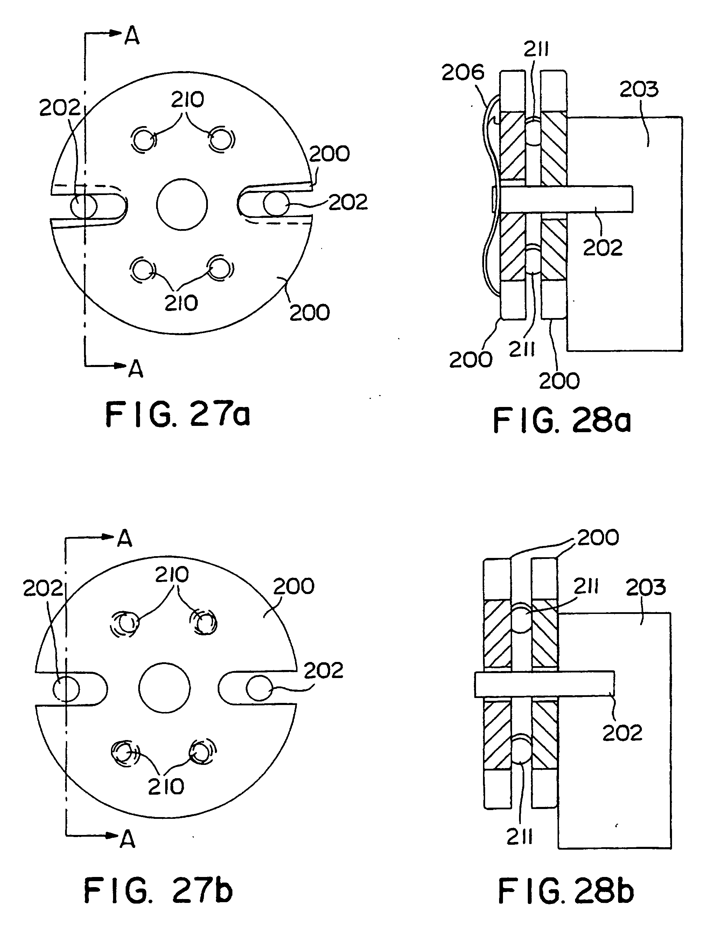

Figure 27a is a top planar view of the synchronizing mechanism of Fig. 26 which depicts the alignment structure of the disc elements in alignment and the slots thereof misaligned.
Figure 27b is a top planar view of the synchronizing mechanism of Fig. 26 which depicts the slots of the disc elements in alignment and the alignment structure thereof misaligned.
Figures 28a and 28b are cross-sectional views of Figs. 27a an 27b taken along planes A-A respectively.
Figures 29a-29c are cross-sectional views of alternative embodiments of alignment structure which can be used in the synchronizing elements.
Figure 30 is an exploded view of a synchronizing mechanism according to further possible developments of a parallel gripper provided with a synchronizing mechanism.

### Best Mode for Carrying out the Invention

The present invention is directed to fluid actuated gripper and clamp mechanisms for engaging, transporting, handling and releasing various workpieces and articles by a pair of opposed movable jaw members. More particularly, the present invention is directed to synchronizing mechanisms for fluid actuated clamps and grippers. The synchronizing mechanisms of the present invention include synchronizing elements that are coupled to jaw guide members. The jaw guide members move parallel to one another in a body which also houses one or more pistons that drive opposed jaw members in a reciprocal manner. The jaw guide members are coupled to the jaw members and used to guide the parallel reciprocal movement of the opposed jaw members.

According to one embodiment, the synchronizing elements are pivotal or rotatable and include slots in opposed sides thereof. The slots can be parallel to one another or aligned (coaxial) with one another. The pivotal or rotatable element can be substantially rectangular or round or can have any convenient shape. The slots in the pivotal or rotatable element are configured to couple to the jaw guides.

In other embodiments the synchronizing mechanisms can include two synchronizing elements which pivot or rotate about a common axis and which slide relative to one another. The synchronizing elements can have different sizes and be telescopic or nest together, i.e. one synchronizing element can be received within the structure of the other so that they can slide toward and away from one another. In other embodiments the two synchronizing elements can be identically shaped and configured to interlock or engage one another in a sliding manner.

In further embodiments of the present invention, the synchronizing mechanism can include a rotating element and shuttle elements which are configured to slide along or within the rotating element in slots or through-holes provided therein.

The synchronizing mechanisms of the present invention can be designed to be removable and replaceable. In this regard, they are positioned in a recess in the body of a clamp or gripper which recess may be closed by a cover that can be removable. The synchronizing mechanisms can be deactivated by removing the cover and lifting the synchronizing element(s) out of engagement with the jaw guide members.

The synchronizing mechanisms of the present invention can ensure that the opposed jaw members close and open together at substantially the same speed and under a balanced force so that they can be used to accurately clamp onto or grip a variety of objects.

According to an aspect of the present invention, the synchronizing mechanisms can be used to drive one of the opposed jaw members. For example, one side of the synchronizing mechanism could be coupled to a single piston which drives one jaw member reciprocally. The other side of the synchronizing mechanism could be coupled to the other jaw member and used to drive the other jaw member without the use of a second piston.

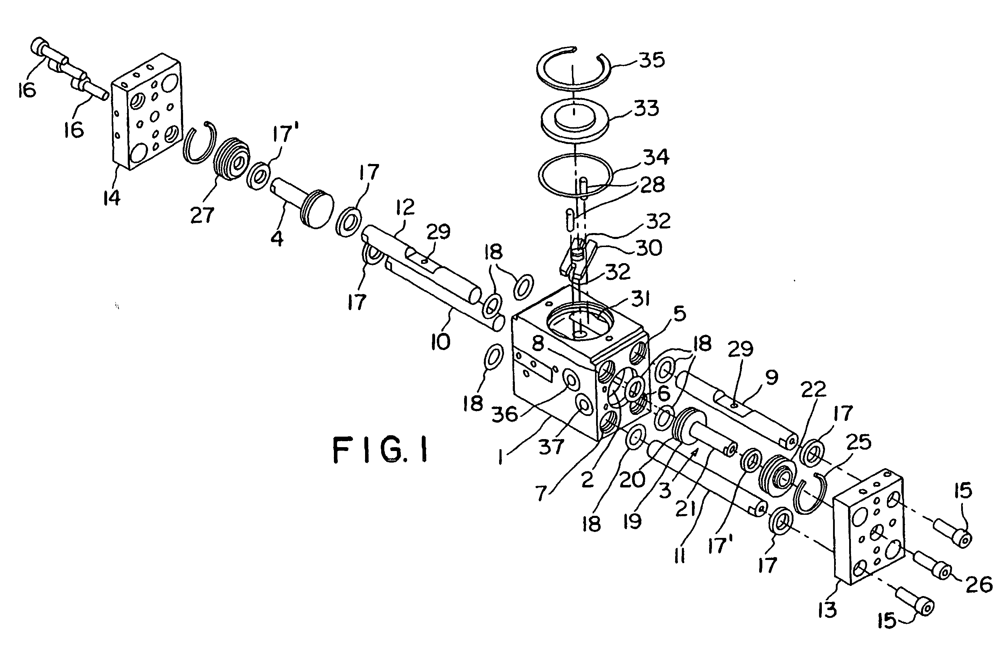

Figure 1 is an exploded perspective view of a parallel gripper assembly according to one embodiment of the present invention. The gripper assembly includes a main body 1 which has a central bore 2 which receives opposed piston elements 3 and 4. The main body 1 further includes a plurality of through-bores 5, 6, 7, and 8 which receive jaw guides 9, 10, 11 and 12. Two opposed jaw members 13 and 14 are provided at opposite ends of the main body 1 and are attached to a pair of the jaw guides as follows. Two of the jaw guides 9 and 11 which are diagonally opposed in the main body 1 are coupled to jaw member 13 by mechanical fasteners 15 as depicted. The other pair of diagonally opposed jaw members 10 and 12 are coupled to jaw member 14 by similar mechanical fasteners 16. Shock pads 17 can be provided on the jaw guides 9, 10, 11 and 12 adjacent the jaw members 13 and 14 to absorb shock between the jaw members 13 and 14 and main body 1. Annular seals such as o-rings 18 can be provided at each end of through-bores 5, 6, 7 and 8 to receive the jaw guides 9, 10, 11 and 12 in a sealing relationship.

Piston 3 includes a head portion 19 with an annular seal 20 on a peripheral surface thereof and a rod portion 21. Piston 3 is secured in central bore 2 by a retainer assembly 22 which includes an outer peripheral seal 23 which seals against the inner surface of central bore 2, and an inner seal 24 that seals against piston rod 21 as it slides through the retainer assembly 22. Figure 1 depicts a retainer ring 25 that can be used to secure retainer assembly 22 in main body 1. A mechanical fastener 26 is used to secure jaw member 13 to rod 21 of piston 3 for reciprocal movement therewith. Shock pad 17' can be provided between retainer assembly 22 and piston 3 to absorb shock when piston 3 is driven into retainer assembly 22. Piston 4, retainer assembly 27, and jaw member 14 shown on the opposite side of main body 1 in Fig. 1 are similarly configured and coupled/assembled together.

An upper one of each pair of the diagonally opposed jaw guides 9 and 12 includes or receive a pin 28 which extends upwardly therefrom at a intermediate position along the jaw guides 9 and 12. Pins 28 can be received in a bore 29 provided in each of the jaw guides 9 and 12 as depicted. The pins 28 are received opposite ends of a synchronizing element 30 which is rotatably coupled within a recess 31 provided in the top of main body 1. Synchronizing element can be an elongated element with aligned slots 32 in each end that receive pins 28. The center of synchronizing element 30 can include a protruding hub that is received in a bore centrally located in recess 31. In an alternative embodiment, the synchronizing element 30 can have a central through-hole that can be positioned over a pin that projects upwardly from recess 31. According to an alternative embodiment of the present invention, the outer ends of the synchronizing elements can include pins which are received in bores provided in the jaw guides 9 and 12. It is noted that the synchronizing element 30 could be provided with closed ended slots instead of open ended slots.

The gripper assembly includes a cover 33 for recess 31. As depicted, a seal element e.g. an o-ring 34 can be used in conjunction with cover 33 to seal recess 31. The cover 33 depicted in Fig. 1 is held in position by a retainer 35. According to other embodiments, the cover 33 could be removably secured in or over recess 31 by any suitable mechanical means. Designing the cover 33 to be easily removed would allow the synchronizing element 30 to be removed and/or replaced. In some situations, one might not want to use the synchronizing mechanism. Removing the synchronizing element 30 would be an easy way to disable the synchronizing mechanism.

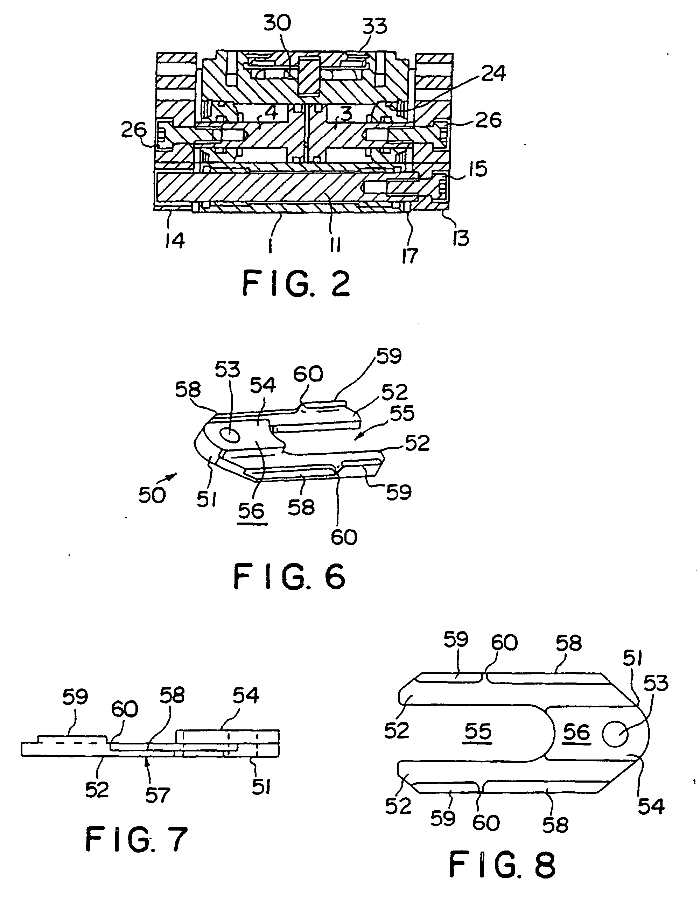

Figure 2 is a cross-sectional side view of the parallel gripper assembly of Fig. 1. Figure 2 depicts how shock pad 17 is positioned on jaw guide 11 between main body 1 and jaw member 13. The other shock pads are similarly positioned on their respective jaw members. Figure 2 also depicts how mechanical fastener 15 is used to secure jaw member 13 to jaw guide 11 and how mechanical fasteners 26 are used to secure jaw members 13 and 14 to pistons 3 and 4. It is noted that fluid ports 36 and 37 shown in Fig. 1 allow for hydraulic or pneumatic fluids to enter central bore 2 and drive pistons 3 and 4 in a conventional manner.

In operation, the synchronizing element 30 of Fig. 1 rotates in opposite directions as jaw guides 9 and 12 move inward and outward with respect to main body 1. The movement of jaw guides 9 and 12 is synchronized by the rotation of synchronizing element 30 and the cooperation of pins 28 which are received in slots 32 of synchronizing element 30.

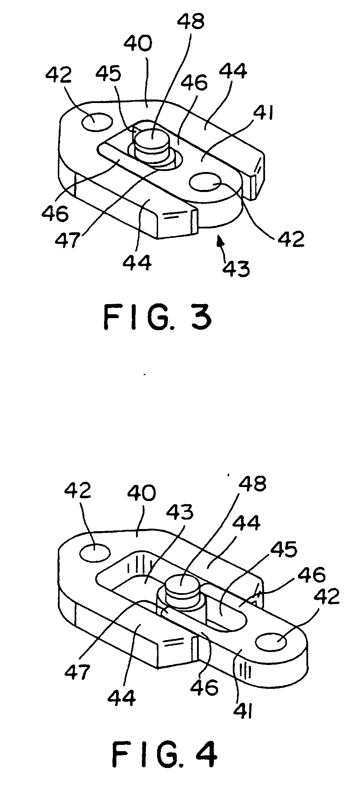

Figure 3 is a perspective view of a synchronizing mechanism according to an alternative embodiment of the present which depicts the mechanism in a closed position. Figure 4 is a perspective view of the synchronizing mechanism of Fig. 3 in an open or expanded position. The synchronizing mechanism of Fig. 3 includes outer 40 and inner 41 synchronizing elements which can be nested together and slide relative to one another. Each of the outer 40 and inner 41 synchronizing elements has a U-shaped structure defined by a base and two parallel arms which extend outwardly from the base. Each of the outer 40 and inner 41 synchronizing elements has a through-hole 42 in its base. As discussed below, through-holes 42 are coupled to pins 28 or other coupling structure provided on jaw guides 9 and 12.

The outer synchronizing element 40 has an open ended slot 43 which is defined between arm members 44, which slot 43 has an inner width that is approximately equal to the outer width of inner synchronizing element 41. The inner synchronizing element 41 has an open ended slot 45 which is defined between arm members 46, which slot 45 has an inner width that is approximately equal to the diameter of pivot pin bushing 47 which is provided on pin 48 in a recess of the main body of the gripper assembly. In an alternative embodiment the pin 48 and pivot pin bushing 47 could comprise an integral structure.

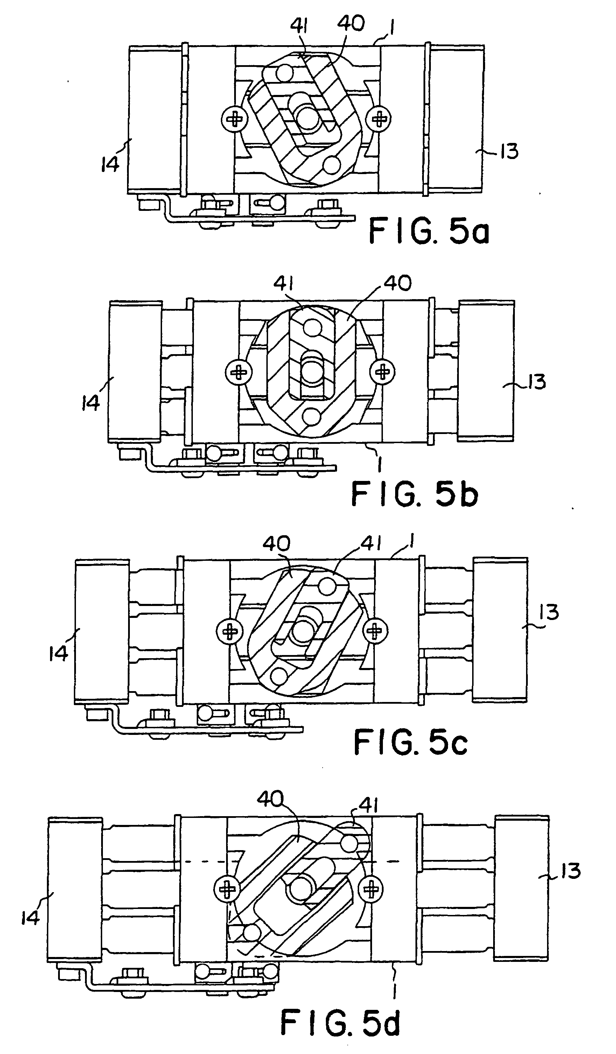

Figures 5a-5d are top planar views which depict the manner in which the synchronizing mechanism of Figs. 3 and 4 operate. In Figures 5a-5d the main body of the gripper assembly has been cut away in order to better depict the jaw guides and the pistons. Also the cover has been removed in order to display the movement of the synchronizing elements 40 and 41. As shown, the jaw members 13 and 14 are progressively further away from the main body 1 as Figs. 5a - 5d progress, so that Fig. 5a depicts the jaw members in a closed position and Fig. 5d depict the jaw members in an open position. As shown in Fig. 5a when the jaw members 13 and 14 are in their closed position, the synchronizer elements 40 and 41 can be slightly open or extended. As the jaw members 13 and 14 begin opening, the outer 40 and inner 41 synchronizing elements can slide toward each other until the inner synchronizing element 41 abuts the outer synchronizing element 40 (Fig. 5b) in their nested position. Thereafter, as the jaw members 13 and 14 continue to open, the outer 40 and inner 41 synchronizing elements slide away from each other until they are fully extended as shown in Fig. 5d. As the jaw members 13 and 14 close, the stages of operation of the synchronizing elements 40 and 41 are reversed from Fig. 5d through Fig. 5a.

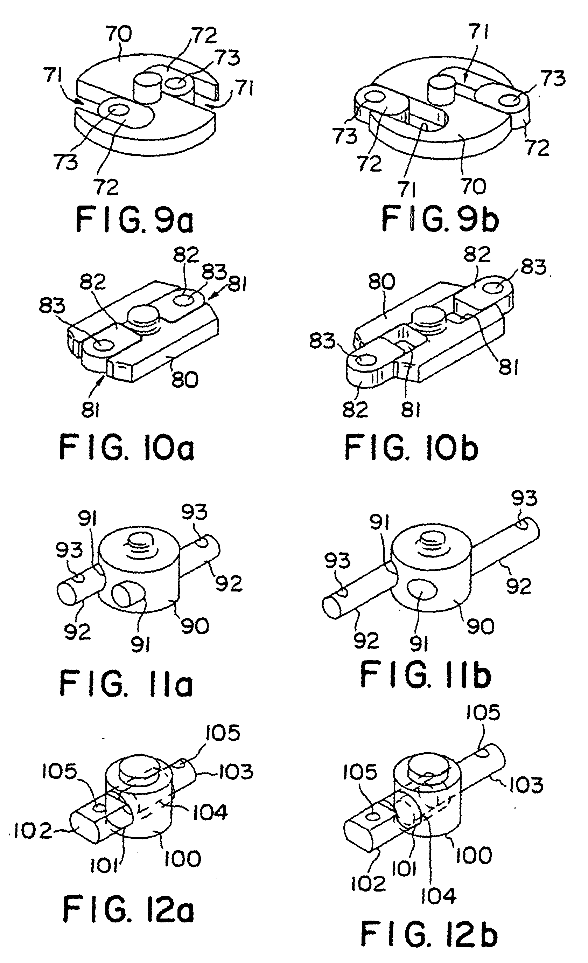

Figure 6 is a perspective view of a synchronizing element according to another embodiment of the present invention. The synchronizing element 50 depicted in Fig. 6 is designed to mate with an identically shaped synchronizing element. Accordingly, rather than require two different, e.g. an inner and an outer synchronizing element as depicted in Figs. 3-5d, a synchronizing assembly according to this embodiment of the present invention can use two identical synchronizing element. This design reduces manufacturing costs and the number of different parts required to build a synchronized gripper assembly.

Figure 7 is a side view of the synchronizing element of Fig. 6. Figure 8 is a top view of the synchronizing element of Fig. 6. The synchronizing element of Figs. 6-8 includes a base 51 and two arms 52 which extend outwardly from the base 51. The base 51 includes a through-hole 53 that is used to couple the synchronizing element to a pin or other coupling structure or element provided on a jaw guide, as discussed above in reference to Figs. 1-5d. The base 51 includes a raised central portion 54 that has parallel sides and a width which is approximately equal to the width of the open ended slot 55 formed between the inner opposed surfaces of the arm 52. The thickness of raised central portion 54 is approximately equal to twice the thickness of the arms 52 so that when two of the synchronizing elements are coupled together with one reversely orientated the upper surface 56 of one raised central portion 54 is substantially coplanar with the lower surface 57 of the opposite synchronizing element. Also, when coupled together, the raised central portion of one synchronizing element is received in the open ended slot of the other synchronizing element.

The arms 52 of the synchronizing element have peripheral recessed edge portions 58 and peripheral raised edge portions 59 which can be configured as depicted so that when two of the synchronizing elements are coupled together as described above, the peripheral raised edge portions 59 of one are received in the peripheral recessed edge portions 58 of the other. This manner of coupling the synchronizing elements together maintains parallel alignment of the coupled synchronizing elements. In addition, the stepped portions 60 between the raised peripheral edge portions 59 and the recessed peripheral edge portions 58 can abut one another on coupled synchronizing elements to limit how far the coupled synchronizing element can move outward from one another.

It is noted that the design of the synchronizing elements described above and depicted in Figs. 6-8 provide for a number of contact surfaces which insure proper parallel alignment and smooth sliding motion between the coupled synchronizing elements. In order to increase the integrity of the synchronizing elements, cross-supports which bridge the otherwise open ended slots can be included. Such cross-supports can ensure that the arms of the synchronizing elements do not spread apart.

Figures 9a-12b are perspective views of alternative synchronizing elements according to the present invention. Each of the synchronizing elements of Figs. 9a-12b include sliding elements which increase the length of travel of the synchronizing elements.

Figures 9a and 9b depict a synchronizing element which includes a rotatable disk 70 having two parallel open ended slots 71. The open ended slots 71 receive shuttle elements 72 that are configured in the open ended slots 71. The shuttle elements 72 have through-holes 73 by which they can be coupled to pins or other coupling structure or elements provided in jaw guides as described above. Figure 9a depicts the synchronizing element in a closed position and Fig. 9b depicts the synchronizing element in an open position.

Figures 10a and 10b depict a synchronizing element which includes a rotatable body 80 having two axially aligned open ended slots 81 at opposed ends thereof. The open ended slots 81 receive shuttle elements 82 that are configured in the open ended slots 81. The shuttle elements 82 have through-holes 83 by which they can be coupled to pins provided in jaw guides as described above. Figure 10a depicts the synchronizing element in a closed position and Fig. 10b depicts the synchronizing element in an open position.

Figures 11a and 11b depict a synchronizing element which includes a hub 90 having two parallel through-holes 91 therein. The through-holes 91 receive shuttle elements 92 that comprise elongate members that are configured to slide in through-holes 91. The shuttle elements 92 have through-holes 93 by which they can be coupled to pins provided in jaw guides as described above. Figure 11a depicts the synchronizing element in a closed position and Fig11b depicts the synchronizing element in an open position.

Figures 12a and 12b depict a synchronizing element which includes a hub 100 having a centrally located through-hole 101 therein. The through-hole 101 receives a pair of telescopic shuttle elements that comprise an outer elongate member 102 and an inner elongate member 103 that is received in a bore 104 of the outer elongate member 102. The outer elongate member 102 is configured to slide within through-hole 101 provided in hub 100 and the inner elongate member 103 is configured to slide within bore 104 of outer elongate member 102. The shuttle elements include through-holes 105 by which they can be coupled to pins provided in jaw guides as described above. Figure 12a depicts the synchronizing element in a closed position and Fig. 12b depicts the synchronizing element in an open position.

The description of Figures 13 to 30 below is not part of the invention.

Figure 13 is an exploded perspective view of a parallel gripper assembly according to further possible developments of a parallel gripper provided with a synchronizing mechanism. The gripper assembly includes a main body 110 which has a central bore 111 which receives opposed pistons 112. Pistons 112 are enclosed in central bore 111 by end covers 113 which together with gaskets 114 seal the ends of central bore 111. End covers 113 and gaskets 114 can be secured to the ends of main body 110 by mechanical fasteners 115 which can be screws, bolts, etc. The gripper assembly is provided with fluid ports 116 and 117 which can be in the main body 110. Fluid ports 116 and 117 can also be provided in an end cover 118. A source of hydraulic or pneumatic fluid can be connected to fluid ports 116 and 117 and used of drive pistons 112 in a conventional manner.

The upper portion of the main body 110 includes an elongate recess 119 in which jaw members 120 are received. The jaw members 120 are coupled to pistons 112 by a pin 121 or other suitable coupling element or structure, so that the jaw members 120 move in a reciprocal manner with the pistons 112.

A recess 122 for receiving the synchronizing mechanism is provided in the top (or side) of main body 110. Recess 122 can intersect elongate recess 119 as shown in Fig. 13.

The jaw members 120 are held in elongate recess 119 by a pair of cover plates 123 which can be secured to the main body 110 by a plurality of mechanical fasteners 124 as indicated.

As shown, the jaw members 120 have stepped side portions 125 which provide clearance for the cover plates 123. In this regard, the inner edges of the cover plates 123 extend over the jaw members 120 when the jaw members 120 are positioned in elongate slot 119 and the cover plates 123 are attached to the main body 110. The jaw members 120 have opposed off-set end portions 126 which allow the jaw members 120 to be positioned partially adjacent one another. The off-set portions 126 include arms 127 which, as discussed in detail below, are configured to engage and cooperate with a synchronizing mechanism. The upper surfaces 130 of the jaw members 120 are configured to be coupled to various jaw tips (not shown). For example, the upper surfaces 130 of the jaw members 120 can be provided with internally threaded holes which will receive mechanical fasteners use to secure jaw tips to the jaw members 120.

The synchronizing mechanism used in the gripper depicted in Fig. 13 includes a disc 131 having a central through-hole 132 and a pair of posts or pins 133 which can be linearly aligned along a common diameter line. The disc 131 is pivotally or rotatably supported on a post, pin or similar structure (not shown) which is in the bottom of recess 122. The disc 131 can also have a central pin, post, etc. which is received in a bore provided in the bottom of recess 122. A means such as spring element 134, a fluid pressurized chamber, magnetically biased structures, etc., is provided beneath disc 131 and used to apply an upward force on disc 131. A shim 136 can be provided beneath spring element 134 if desired. It is to be noted that the reference to the disc herein is not to be construed as being limited to a circular structure. Other shapes including those shown in the various figures could be used.

The synchronizing mechanism includes wedge elements 137 which are conically shaped in the gripper depicted in Fig. 13. The wedge elements 137 include central through-holes 141 which are sized so that the wedge elements 137 can be positioned on posts or pins 133 for rotational movement thereon. The off-set ends 126 of the jaw members 120 include grooves 138 having tapered walls as discussed below which receive wedge elements 137.

Figure 14 is an enlarged view of the synchronizing mechanism of Fig. 13 which is provided to show more details of the synchronizing mechanism. In Figure 14 it can be seen that grooves 138 extend across the off-set ends 126 of the jaw members 120. The opposed walls 140 of the grooves 138 are tapered so as to appropriately match the tapered angle of the wedge elements 137.

In operation, the jaw members 120 move together with pistons 112 under pneumatic or hydraulic fluid pressure. As the jaw members 120 move, the wedge elements 137 slide in grooves 138 and cause disc 131 to rotate in opposite angular directions. The movement of jaw members 120 is synchronized by the rotation of disc 131 and the cooperative movement of wedge elements 137 in grooves 138.

The wedge elements 137 are free to rotate about post or pins 133. Over time, as the tapered surface of the wedge elements 137 and/or the side walls 140 of the grooves 138 wear, the spring element 134 will urge the disc 131 and wedge elements 137 into the grooves 138 and thereby compensate or adjust for any wear. This manner of compensating or adjusting for wear will help ensure that the synchronization of the movement of the jaw members 120 is maintained.

Figures 15a-15g are perspective views of alternative wedge elements. In the gripper depicted in Figs. 13 and 14, the wedge elements 137 include central through-holes for positioning the wedge elements 137 on posts or pins 133 of disc 131. The wedge elements 137 could also be provided with posts which are received in holes or bores provided in disc 131.

Figure 15a is a wedge element 137 which has a shape similar to the corresponding wedge element 137 in Figs. 13 and 14. This wedge element 137 includes a central through-hole 141 about which it can rotate as it moves along grooves 138.

Figure 15b depicts a wedge element 142 which can be elongate with opposed tapered sides 143 and a central through-hole 141. This wedge element 142 can slide along grooves 138 while post or pins 133 rotate within through-hole 141.

Figure 15c is another example of an elongate wedge element 145. Wedge element 145 of Fig. 15c includes a longitudinal slot 146 which intersects through-hole 141. Slot 146 allows side walls 143 to flex with respect to one another so that, as the wedge element 145 is pushed into groove 138 by spring element 134, the width of slot 146 will change and thereby adjust the fit of the side walls 143 of wedge element 145 with respect to the side walls 140 of groove 138. At the same time, slot 146 can allow adjustment of the fit of wedge element 145 on post or pin 133.

Figure 15d depicts a spherically shaped wedge element 147 which includes a central through-hole 141. Wedge element 147 can rotate within grooves 138 and about post or pins 133.

The wedge elements 150 and 155 shown in Figs. 15e and 15f correspond to the wedge element 137 and 142 in Figs. 15a and 15b, but include posts 151 rather than central through-holes 141. These wedge elements 150 and 155 are coupled to a disc 131 by inserting their posts 151 into bores or holes provided in a disc 131. These wedge elements 150 and 155 are rotatable with respect to a disc 131 about their posts or pins 151.

Figure 15g depicts a wedge element that includes opposed conical tapered end portions 137' and a central through-hole 141.

Figures 16 and 17 are perspective views of synchronizing mechanisms according to further possible developments of a parallel gripper provided with a synchronizing mechanism. The synchronizing mechanisms of Figs. 16 and 17 do not require the spring element 134 shown in Figs 13 and 14. The wedge elements 160 depicted in Figs. 16 and 17 include central bores which receive individual spring elements 161. Wedge elements 160 are received in slots 162 in the disc 163 of Fig. 16 and in bores 164 in the disc 165 in Fig. 17. Spring elements 161 push against discs 163, 165 and urge wedge elements 160 into grooves 138 provided in the off-set portions 126 of jaw members 120. In Fig. 16, the wedge elements 160 can slide within slots 162 and thereby increase the length of travel of the jaw members 120. It is noted that in Fig. 16, the jaw member includes a tapered hole or bore 138' which can receive wedge element 160.

Figure 18 is a perspective view of synchronizing mechanisms according to further possible developments of a parallel gripper provided with a synchronizing mechanism. The synchronizing mechanism of Figs. 13 and 14 required grooves 138 in the off-set portion 126 of jaw members 120. In Fig. 18, the off-set portion 126 of jaw member 120 is provided with a post or pin 170 upon which a spring element 171 is received. The spring element 171 is in turn received in a bore 172 provided in wedge element 173. Spring element 171 pushes wedge element 173 into a slot 174 having tapered side walls 175 which is provided in synchronizing element 177.

Figure 19 is an exploded perspective view of a synchronizing mechanism according to further possible developments of a parallel gripper provided with a synchronizing mechanism. In Fig. 19, the posts or pins 180 of a pair of jaw members (not shown) are depicted as being between two half disc elements 181. The half disc elements include hubs 182 with through-holes 183 therein. When the hubs 182 are aligned as depicted in Fig. 20, the posts or pins 180 of the jaw members are positioned in a gap 184 that is provided between the half disc elements 181. This gap 184 is comparable to the open-ended slots in the synchronizing element of Fig. 1 in regard to the manner in which the posts or pins 180 of the jaw members are received therein. The through-holes 183 in the hubs 182 are sized so that the half disc elements 181 can be aligned as shown in Fig. 20 and positioned for rotation on a post or pin which is in recess 122 (See Fig. 13).

In Fig. 19, if one of the jaw members starts to move faster or slower than the other jaw member, its post or pin 180 contacts and pushes against a radial surface 185 of one of the half disc elements 181. As the pushed half disc element 181 pivots about its hub 182, the other radial surface thereof (opposite the hub 182) pushes against the post or pin 180 of the other jaw member. This interaction of the synchronizing elements causes the other jaw member to be advanced or retarded proportionally. Since the other half disc element 181 functions in the same manner to advance or retard the first jaw members, the resulting effect compensates for any imbalance in motion of the jaw members.

Figure 20 is a top planar view of the synchronizing mechanism of Fig. 19 which shows the jaw members 187 in phantom lines. Figure 21 is a side view of the synchronizing mechanism of Fig. 20 taken parallel to one of the jaw members. Figures 20 and 21 depict the use of a cylindrical pivot post or pin 186 which would normally be positioned in recess 122 of Fig. 13. In Figs. 19-21 the half disc elements 181 are depicted as being substantially planar.

Figure 22 is a side view of an alternative half disc element which can be used. Figure 23 is a side view of two of the half disc elements of Fig. 22 coupled together with their through-holes aligned. The half disc element 190 of Fig. 22 has a stepped portion 191 adjacent the hub 192 . This stepped shape enables two half disc elements 190 to be coupled together and form a planar structure as depicted in Fig. 23.

Figure 24 is a side view of an eccentric pivot post or pin which can be used to allow for manual adjustment of the slot or gap between the radial surfaces 185 of half disc elements 181 depicted in Figs. 19-23. A torsion spring could also be incorporated to provide for self adjustment. Figures 25a and 25b are top planar views which depict how the eccentric pivot post or pin of Fig. 24 can be used to adjust the clearance between two half disc elements.

The pivot post or pin 194 of Fig. 24 includes two cylindrical portions 195, 196 which are eccentric with respect to one another. That is, their axes are parallel, but off-set from one another. By turning or rotating pivot post or pin 194 and securing it in position in recess 122 (see Fig. 13) by a setscrew or other means, the clearance between the radial surfaces 185 of the half disc elements 181 can be adjusted. For example, Fig. 25a depicts the axes of cylindrical portions 195, 196 of pivot post or pin 194 linearly aligned perpendicular to the radial surfaces 185 of the half disc elements 181. This alignment, achieved by rotation of the pivot post or pin 194, provides the most clearance between the radial surfaces 185 of the half disc elements 181. In Fig. 25b the axes of cylindrical portions 195, 196 of pivot post or pin 194 are linearly aligned parallel to the radial surfaces 185 of the half disc elements 181. This alignment, achieved by rotation of the pivot post or pin 194, provides intermediate clearance between the radial surfaces 185 of the half disc elements 181. Further rotation of pivot post or pin 194 from its position in Fig. 25b will produce a minimum clearance between the radial surfaces 185 of the half disc elements 181.

The depicted in Figs. 24 and 25 allows the clearance between radial surfaces 185 of the half disc elements 181 to be adjusted. It is also possible to adjust the center position of the hubs of the half disc elements 181, relative to the recess 122 (see Fig. 13). This can be accomplished by a number of ways, including providing an eccentric collar on one or both ends of the pivot post of pin 194 (or 186). Such a collar(s) could be received in a bore in recess 122 and turned to adjust the centering of the pivot post of pin 194 (or 186). After adjustment, the collar(s) could be secured in position using one or more setscrews or other means. In alternative embodiments, setscrews and/or wedges could be used in place of, or in addition to eccentric collars.

The use of eccentric collars or other means to adjust the centering on the pivot post or pin 194 (or 186) could be used in conjunction with any of the embodiments of the invention disclosed herein.

Figure 26 is a perspective exploded view of a synchronizing mechanism according to further possible developments of a parallel gripper provided with a synchronizing mechanism. The synchronizing mechanism of Fig. 26 includes two disc elements 200 which are provided with slots 201 that are configured to receive posts or pins 202 of jaw members 203. In addition, the opposed faces 204 of the disc elements 200 are provided with alignment structure which can include channels 205. The alignment structure or channels 205 and the slots 201 are aligned slightly differently with respect to one another on each of the disc elements 200 so that when the alignment structure or channels 205 of the two disc elements 200 are aligned with one another, the slots 201 of the two disc elements 200 are misaligned (as depicted in Fig. 27a).

In Fig. 26, a spring element 206 is used to urge disc elements 200 together and into the alignment dictated by the alignment structure or channels 205. Spring element 206 can be positioned in a recess 122 similarly to the spring element 134 depicted in Fig. 13.

In Fig. 26 the alignment structure or channels 205 work in conjunction with bearings 207 which are receive in channels 205. As the disc elements 200 are pushed together by spring element 207, the bearings 207 tend to center the opposed channels 205 together (as depicted in Fig. 27a). This centering or aligning of the alignment structure or channels 205 on the disc elements 200 causes the slots 201 to be misaligned or off-set from one another. As a result, a post or pin 202 of a jaw member 203 which is positioned within the slots 201 of the disc elements 200 tends to be pinched or gripped as the slots 201 are urged out of alignment. As a result, there is a tight fit and little play between the posts or pins 202 of the jaw elements 203 and the coupled disc elements 200.

Figure 27a is a top planar view of the synchronizing mechanism similar to that of Fig. 26 which depicts the alignment structure of the disc elements in alignment and the slots thereof misaligned. Figure 27b is a top planar view of the synchronizing mechanism similar to that of Fig. 26 which depicts the slots of the disc elements in alignment and the alignment structure thereof misaligned. In Figs 27a and 27b the alignment structure of the disc elements 200 include through-holes or bores 210 and ball bearings 211 (see Fig. 28a) which are positioned between the disc elements 200. Figure 27 depicts how the disc elements 200 would be aligned when spring element 206 pushes or urges the disc elements 200 together. Figure 27b depicts how the disc elements 200 would be aligned before the disc elements 200 are pushed or urged together.

Figures 28a and 28b are cross-sectional views of Figs. 27a an 27b taken along planes A-A respectively. In Fig. 28a the manner in which the post or pin 202 of jaw member 203 is pinched or gripped between slots 201 of disc elements 200 can be seen. In Fig. 28b the slots 201 are aligned with one another so they do not pinch or grip the post or pin 202 of jaw member 203.

Figures 29a-29c are cross-sectional views of alternative alignment structure which can be used in the synchronizing elements. Figure 29a depicts the use of channels or bores 220 having tapered side walls 221 and a roller or ball bearing 222 which is positioned between and partially within the channels or bores 220 of opposed disc elements 200.

Figure 29b depicts the use of slots or holes 223 having parallel side walls 224 and a roller or ball bearing 225 which is positioned between and partially within the slots or holes 223 of opposed disc elements 200. In further embodiments chamfers or bevels can be provided at the surface of slots or holes 223.

Figure 29c depicts opposed ramp structures or cam surfaces 230 which are provided on opposed faces of two disc elements 200. When the disc elements 230 are pushed or urged together, the ramp structures or cam surfaces 230 contact and slide along one another and thereby move the disc elements 200 into alignment.

Figure 30 is an exploded view of a synchronizing mechanism according to further possible developments of a parallel gripper provided with a synchronizing mechanism. The synchronizing mechanism of Fig. 30 includes two half disc elements 300 which are configured to slide with respect to one another. In this regard, the half disc elements 300 have recessed tongue portions 301. The half disc elements 300 can be coupled together by aligning their recessed tongue portions 301 as shown in Fig. 30. The half disc elements 300 include oblong central holes 302 which are configured to receive a pivot post or pin as discussed below. Alignment structure such as holes 303 (optionally chamfered or beveled) are provided in the opposed faces of the tongue portions 301 of the half disc elements 300, and are aligned so as to position the half disc elements as discussed below. The alignment structure or holes 303 cooperate with bearings 304 so that when the half disc elements 300 are pushed or urged together by the force of spring element 305, the radial surfaces 306 of the half disc elements 300 close against posts or pins 307 of jaw members (not shown). Also, the oblong center holes 302 of the half disc elements 300 close about a pivot post or pin provided in recess 122 (see Fig. 13).

The synchronizing elements of the present invention can be made of any suitable durable material, including metals and plastics, and can be used in conjunction with various parallel gripper and clamp devices.

Although the present invention has been described with reference to particular means, materials and embodiments, from the foregoing description, one skilled in the art can easily ascertain the essential characteristics of the present invention and various changes and modifications may be made to adapt the various uses and characteristics without departing from the scope of the present invention as described by the claims which follow.

## Claims

1. A gripper assembly comprising:
a body (1);
at least one piston (3, 4) provided within a chamber (2) within the body (1) for opposed reciprocal movement therein;
a pair of opposed jaw members (13, 14) the jaw members (13, 14) being located at opposite ends of the body (1), at least one of the jaw members (13, 14) being coupled to one of the at least one piston (3, 4) for reciprocal movement between open and closed positions;
first and second elongate jaw guide members (9, 12), wherein the first elongate jaw guide member (9) is attached to one of the opposed jaw members (13, 14) and is positioned substantially parallel to the second elongate jaw guide member (12) which is attached to the other of the opposed jaw members (13, 14); and
a synchronising assembly located in a recess (31) formed in the body (1), the recess (31) extends from the body's (1) exterior allowing access to the synchronising assembly, wherein the synchronising assembly is rotatable about an axis, and wherein first and second through-holes (5, 8) are formed in the body (1) and extend into the recess (31),
**characterised in that** the synchronising assembly is engageable with the first and second elongate jaw guide members (9, 12) by a pin (28) extending through the first through-hole (5) from the first elongate jaw guide member (9) and another pin (28) extending through the second through-hole (8) from the second elongate jaw guide member (12).

2. A gripper assembly according to Claim 1, wherein the synchronising assembly (30) includes one synchronising element (30) which is coupled to each of the two elongate jaw guide members (9, 12).

3. A gripper assembly according to Claim 1, wherein the synchronising assembly includes at least two synchronising elements (40, 41) which are coupled to the two elongate jaw guide members (9, 12).

4. A gripper assembly according to Claim 1, further including a cover (33) over the recess (31).

5. A gripper assembly according to Claim 1, further comprising at least two additional elongate jaw guide members (10, 11) which are coupled separately to each of the pair of opposed jaw members (13, 14).

6. A gripper assembly according to Claim 3, wherein the at least two synchronising elements are identically shaped.

7. A gripper assembly according to Claim 6, wherein the at least two synchronising elements are configured to interlock with one another in a sliding manner.

8. A gripper assembly according to Claim 1, wherein the synchronising assembly comprises:
at least two synchronising elements (40, 41) which are slidable with respect to one another and are configured to rotate about a common axis which is located between the elongate jaw guide members (9, 12).

9. A gripper assembly according to Claim 8, wherein the pins (28) extend into through-holes (42, 53) located in ends of the at least two synchronising elements (40, 41).

10. A gripper assembly according to Claim 8, wherein the at least two synchronising elements (40, 41) are substantially the same size.

11. A gripper assembly according to Claim 8, wherein the at least two synchronising elements (40, 41) have different sizes.

12. A gripper assembly according to Claim 8, wherein the at least two synchronising elements are nested together.

13. A gripper assembly according to Claim 8, wherein the at least two synchronising elements (40, 41) are telescopic.

14. A gripper assembly according to Claim 8, wherein the at least two synchronising elements (40, 41) are U-shaped.

15. A gripper assembly according to Claim 14, wherein the at least two synchronising elements (40, 41) are substantially identically shaped.

16. A gripper assembly according to Claim 15, wherein the at least two synchronising elements (40, 41) include a base (51) and two arms (44, 46, 52) extending outward from the base (51) which are configured so that the arms (44, 46, 52) of one of the at least two synchronising elements (40, 41) interlock with corresponding arms (44, 46, 52) of the other of the at least two synchronising elements (40, 41).

17. A gripper assembly according to Claim 16, wherein the arms (52) have outer side edges that are recessed along one portion (58) and raised along another portion (59).

18. A gripper assembly according to Claim 17, wherein the raised portions (59) of the arms (52) are located adjacent an end of the arms (52) that is opposite the base (51).

19. A gripper assembly according to Claim 15, wherein the at least two synchronising elements include a base (51) and two arms (52) extending outward from the base (51), and wherein the base (51) includes a raised central portion (54) which is configured so that the raised central portion (54) of each of the at least two synchronising elements can be received within a slot (55) defined between the arms (52) of the other synchronising element.

## Patentansprüche

1. Greiferanordnung mit:
einem Körper (1);
mindestens einem Kolben (3,4), der innerhalb einer Kammer (2) innerhalb des Körpers (1) bereitgestellt ist, um sich darin hin- und herzubewegen;
einem Paar von gegenüberliegenden Klauenelementen (13,14), wobei die Klauenelemente an gegenüberliegenden Enden des Körpers (1) angeordnet sind, wobei mindestens eines der Klauenelemente (13,14) mit dem mindestens einen Kolben (3,4) verbunden ist, um sich zwischen einer offen und geschlossenen Position zu bewegen;
einem ersten und zweiten länglichen Klauenführungselement (9,12), wobei das erste längliche Klauenführungselement (9) an einem der sich gegenüberliegenden Klauenelemente (13,14) angebracht ist und im wesentlichen parallel zum zweiten länglichen Klauenführungselement (12) angeordnet ist, das an dem anderen der sich gegenüberliegenden Klauenelemente (13,14) angebracht ist; und
einer Synchronisieranordnung, die in einer im Körper (1) gebildeten Aussparung (31) angeordnet ist, wobei sich die Aussparung (31) von der Außenseite des Körpers (1) aus erstreckt, unter Ermöglichung eines Zugangs zu der Synchronisieranordnung, wobei die Synchronisieranordnung um eine Achse drehbar ist und wobei ein erstes und zweites Durchgangsloch (5,8) im Körper (1) gebildet sind und sich in die Aussparung (31) hinein erstrecken,
**dadurch gekennzeichnet, daß** die Synchronisieranordnung mittels eines Stifts (28), der sich durch das erste Durchgangsloch (5) von dem ersten länglichen Klauenführungselement (9) aus erstreckt, und eines anderen Stifts (28), der sich durch das zweite Durchgangsloch (8) von dem zweiten länglichen Klauenführungselement (12) aus erstreckt, mit dem ersten und zweiten länglichen Klauenführungselement (9,12) in Eingriff gebracht werden kann.

2. Greiferanordnung nach Anspruch 1, wobei die Synchronisieranordnung (30) ein Synchronisierelement (30) aufweist, das mit jedem der zwei länglichen Klauenführungselemente (9,12) verbunden ist.

3. Greiferanordnung nach Anspruch 1, wobei die Synchronisieranordnung mindestens zwei Synchronisierelemente (40,41) aufweist, die mit den zwei länglichen Klauenführungselementen (9,12) verbunden sind.

4. Greiferanordnung nach Anspruch 1, ferner mit einer Abdeckung (33) oberhalb der Aussparung (31).

5. Greiferanordnung nach Anspruch 1, ferner mit mindestens zwei zusätzlichen länglichen Klauenführungselementen (10,11), die separat mit jedem Klauenelement (13,14) des Paars von sich gegenüberliegenden Klauenelementen (13,14) verbunden sind.

6. Greiferanordnung nach Anspruch 3, wobei die mindestens zwei Synchronisierelemente eine identische Gestalt haben.

7. Greiferanordnung nach Anspruch 6, wobei die mindestens zwei Synchronisierelemente so konstruiert sind, um gleitend ineinander zu greifen.

8. Greiferanordnung nach Anspruch 1, wobei die Synchronisieranordnung aufweist:
mindestens zwei Synchronisierelemente (40,41), die zueinander gleitbar sind und so konstruiert sind, daß sie um eine gemeinsame Achse drehbar sind, die zwischen den länglichen Klauenführungselementen (9,12) angeordnet ist.

9. Greiferanordnung nach Anspruch 8, wobei sich die Stifte (28) in Durchgangslöcher (42,53) hinein erstrecken, die in Enden der mindestens zwei Synchronisierelemente (40,41) angeordnet sind.

10. Greiferanordnung nach Anspruch 8, wobei die mindestens zwei Synchronisierelemente (40,41) im wesentlichen die gleiche Größe haben.

11. Greiferanordnung nach Anspruch 8, wobei die mindestens zwei Synchronisierelemente (40,41) unterschiedliche Größen haben.

12. Greiferanordnung nach Anspruch 8, wobei die mindestens zwei Synchronisierelemente ineinander gesteckt sind.

13. Greiferanordnung nach Anspruch 8, wobei die mindestens zwei Synchronisierelemente (40,41) teleskopisch sind.

14. Greiferanordnung nach Anspruch 8, wobei die mindestens zwei Synchronisierelemente (40,41) U-förmig sind.

15. Greiferanordnung nach Anspruch 14, wobei die mindestens zwei Synchronisierelemente (40,41) eine im wesentlichen identische Gestalt haben.

16. Greiferanordnung nach Anspruch 15, wobei die mindestens zwei Synchronisierelemente (40,41) eine Basis (51) und zwei sich von der Basis (51) aus nach außen erstreckende Arme (44,46,52) aufweisen, die so konstruiert sind, daß die Arme (44,46,52) eines der mindestens zwei Synchronisierelemente (40,41) in die entsprechenden Arme (44,46,52) des anderen der mindestens zwei Synchronisierelemente (40,41) greifen.

17. Greiferanordnung nach Anspruch 16, wobei die Arme (52) äußere Seitenkanten haben, die entlang eines Abschnitts (58) vertieft sind und entlang eines anderen Abschnitts (59) erhöht sind.

18. Greiferanordnung nach Anspruch 17, wobei die erhöhten Abschnitte (59) der Arme (52) angrenzend an ein Ende der Arme (52) angeordnet sind, das der Basis (51) gegenüberliegt.

19. Greiferanordnung nach Anspruch 15, wobei die mindestens zwei Synchronisierelemente (40,41) eine Basis (51) und zwei sich von der Basis (51) aus nach außen erstreckende Arme (52) aufweisen und wobei die Basis (51) einen erhöhten zentralen Abschnitt (54) aufweist, der so konstruiert ist, daß der erhöhte zentrale Abschnitt (54) jedes der mindestens zwei Synchronisierelemente innerhalb eines Schlitzes (55) aufgenommen werden kann, der zwischen den Armen (52) des anderen Synchronisierelements definiert ist.

## Revendications

1. Assemblage de pince de saisie comprenant :
un corps (1) ;
au moins un piston (3, 4) prévu à l'intérieur d'une chambre (2) à l'intérieur du corps (1) effectuant un mouvement réciproque opposé dans ce dernier ;
une paire d'éléments (13, 14) de mâchoire opposés, les éléments (13, 14) de mâchoire étant placés au niveau d'extrémités opposées du corps (1), au moins un des éléments (13, 14) de mâchoire étant couplé à l'un des au moins un piston (3, 4) afin d'effectuer un mouvement réciproque entre des positions ouverte et fermée ;
des premier et deuxième éléments guides allongés (9, 12) de mâchoire, dans lesquels le premier élément guide allongé (9) de mâchoire est fixé à l'un des éléments (13, 14) de mâchoire opposés et est positionné de manière sensiblement parallèle au deuxième élément guide allongé (12) de mâchoire qui est fixé à l'autre des éléments (13, 14) de mâchoire opposés ; et
un assemblage de synchronisation classé dans un évidement (31) formé dans le corps (1), l'évidement (31) s'étend depuis l'extérieur du corps (1), permettant un accès à l'assemblage de synchronisation, dans lequel l'assemblage de synchronisation est rotatif sur un axe, et dans lequel des premier et deuxième trous débouchants (5, 8) sont formés dans le corps (1) et s'étendent dans l'évidement (31),
**caractérisé en ce que** l'assemblage de synchronisation est enclenchable avec les premier et deuxième éléments guides allongés (9, 12) de mâchoire grâce à une goupille (28) s'étendant au travers du premier trou débouchant (5) depuis le premier élément guide allongé (9) de mâchoire et une autre goupille (28) s'étendant au travers du deuxième trou débouchant (8) depuis le deuxième élément guide allongé (12) de mâchoire.

2. Assemblage de pince de saisie selon la revendication 1, dans lequel l'assemblage (30) de synchronisation inclut un élément (30) de synchronisation qui est couplé à chacun des deux éléments guides allongés (9, 12) de mâchoire.

3. Assemblage de pince de saisie selon la revendication 1, dans lequel l'assemblage de synchronisation inclut au moins deux éléments (40, 41) de synchronisation qui sont couplés aux deux éléments guides allongés (9, 12) de mâchoire.

4. Assemblage de pince de saisie selon la revendication 1, incluant en outre un couvercle (33) au-dessus de l'évidement (31).

5. Assemblage de pince de saisie selon la revendication 1, comprenant en outre au moins deux éléments guides allongés (10, 11) de mâchoire qui sont couplés de manière séparée à chacun des éléments de la paire d'éléments (13, 14) de mâchoire opposée.

6. Assemblage de pince de saisie selon la revendication 3, dans lequel les au moins deux éléments de synchronisation sont de forme identique.

7. Assemblage de pince de mâchoire de saisie selon la revendication 6, dans lequel les au moins deux éléments de synchronisation sont configurés de manière à se verrouiller l'un avec l'autre d'une façon coulissante.

8. Assemblage de pince de saisie selon la revendication 1, dans lequel l'assemblage de synchronisation comprend :
au moins deux éléments (40, 41) de synchronisation qui sont coulissants l'un par rapport à l'autre et sont configurés afin de tourner sur un axe commun qui est placé entre les éléments guides allongés (9, 12) de mâchoire.

9. Assemblage de pince de saisie selon la revendication 8, dans lequel les goupilles (28) s'étendent dans les trous débouchants (42, 53) placés aux extrémités des au moins deux éléments (40, 41) de synchronisation.

10. Assemblage de pince de saisie selon la revendication 8, dans lequel les au moins deux éléments (40, 41) de synchronisation sont sensiblement de la même taille.

11. Assemblage de pince de saisie selon la revendication 8, dans lequel les au moins deux éléments (40, 41) de synchronisation sont de tailles différentes.

12. Assemblage de pince de saisie selon la revendication 8, dans lequel les au moins deux éléments de synchronisation sont emboîtés ensemble.

13. Assemblage de pince de saisie selon la revendication 8, dans lequel les au moins deux éléments (40, 41) de synchronisation sont coulissants.

14. Assemblage de pince de saisie selon la revendication 8, dans lequel les au moins deux éléments (40, 41) de synchronisation sont sensiblement en forme de U.

15. Assemblage de saisie selon la revendication 14, dans lequel les au moins deux éléments (40, 41) de synchronisation sont sensiblement de forme identique.

16. Assemblage de pince de saisie selon la revendication 15, dans lequel les au moins deux éléments (40, 41) de synchronisation incluent une base (51) et deux bras (44, 46, 52) s'étendant vers l'extérieur depuis la base (51), qui sont configurés de manière à ce que les bras (44, 46, 52) de l'un des au moins deux éléments (40, 41) de synchronisation se verrouillent avec des bras (44, 46, 52) correspondants de l'autre des au moins deux éléments (40, 41) de synchronisation.

17. Assemblage de pince de saisie selon la revendication 16, dans lequel les bras (52) ont des bords latéraux extérieurs qui sont en retrait le long d'une partie (58) et surélevés le long d'une autre partie (59).

18. Assemblage de pince de saisie selon la revendication 17, dans lequel les parties (59) surélevées des bras (52) sont placées de manière adjacente à une extrémité des bras (52) qui est à l'opposé de la base (51).

19. Assemblage de saisie selon la revendication 15, dans lequel les au moins deux éléments de synchronisation incluent une base (51) et deux bras (52) s'étendant vers l'extérieur depuis la base (51) et dans lequel la base (51) inclut une partie (54) centrale surélevée qui est configurée de manière à ce que la partie (54) centrale surélevée de chacun des au moins deux éléments de synchronisation puisse être reçue à l'intérieur d'une fente (55) définie entre les bras (52) de l'autre élément de synchronisation.
